# EUROPEAN PATENT APPLICATION

(11) **EP 4 290 019 A1**
(43) Date of publication of application: **13.12.2023**
(21) Application number: 22749826.8
(22) Date of filing: 04.02.2022
(51) Int. Cl.: E02F 9/00, E02F 9/16, E02F 9/24

(54) **CONSTRUCTION MACHINE**

(30) Priority: 05.02.2021 JP 2021017432
(71) Applicant: Yanmar Holdings Co., Ltd., Osaka-shi, Osaka, 530-0013 (JP)
(72) Inventor: OKAZAKI Kohei, Chikugo-shi, Fukuoka 833-0055 (JP)
(74) Representative: Dennemeyer & Associates S.A.
(86) International application number: PCT/JP2022/004516
(87) International publication number: WO 2022/168955

(57) **Abstract**

A shovel (100) is provided with a traveling body (9), a turning body (10), and a reception unit (3). The turning body (10) is disposed on top of the traveling body (9), and turns about a turning axis (AX) with respect to the traveling body (9). The reception unit (3) receives, from a reference station (200), specification information for specifying the position of the turning body (10). The reception unit (3) is disposed between the turning axis (Ax) and the rear end (10b) of the turning body (10). The turning body (10) preferably includes a cabin (11). The reception unit (3) is preferably disposed in a rear portion of the cabin (11).

## Description

### TECHNICAL FIELD

The present invention relates to a construction machine.

### BACKGROUND ART

In recent years, there has been a growing demand for information-oriented construction, for example, in a construction business field. Therefore, a hydraulic shovel described in Patent Literature 1 is provided with a lower traveling body, an upper turning body that is provided on the lower traveling body so as to be able to turn freely, and a position detection unit. The position detection unit has two antennas for RTK - GNSS and a position calculator. Signals in response to the GNSS signals received by the two antennas are input to the position calculator. The position calculator detects current positions of two antennas in a global coordinate system.

### CITATION LIST

### Patent Literature

Patent Literature 1: Japanese Patent No. 5873607

### DISCLOSURE OF INVENTION

### PROBLEMS TO BE SOLVED BY THE INVENTION

Information-oriented construction, for example, is a system that aims to improve productivity and ensure quality in an entire construction production process by achieving highly accurate construction. Therefore, there is a demand to further improve accuracy of a detection of current positions of two antennas by a position calculator, that is to say, positioning of a hydraulic excavator. For the purpose of improving the accuracy of the positioning of the hydraulic excavator, it is considered that, for example, a reference station would be installed in the vicinity of a work site where the hydraulic excavator works. The reference station has position information indicating installation position of the reference station and receives satellite signals from positioning satellites to generate specific information (calibration information) for identifying a position of the hydraulic excavator. On the other hand, the hydraulic excavator is equipped with a receiver for receiving specific information from the reference station. The position calculator uses the specific information received by the receiver to calibrate the current positions of the two antennas detected according to GNSS signals received by the two antennas.

However, Patent Literature 1 does not disclose that a receiver for receiving the specific information is attached to the hydraulic excavator. Therefore, depending on a position where the receiver is attached, there is a possibility that the receiver may come into contact with obstacles located around the hydraulic excavator.

The present invention has been made in light of the above-mentioned problem, and the object is to provide a construction machine capable of further enhancing safety.

### MEANS FOR SOLVING THE PROBLEMS

According to one aspect of the present invention, a construction machine is provided with a traveling body, a turning body, and a reception unit. The turning body is disposed above the traveling body and turns around a turning axis with respect to the traveling body. The reception unit receives from an external device specific information to identify a position of the turning body. The reception unit is arranged between the turning axis and a rear end of the turning body.

### EFFECT OF THE INVENTION

According to the present invention, safety can be further enhanced.

### BRIEF DESCRIPTION OF DRAWINGS

FIG. 1 is a schematic diagram explaining positioning of an excavator according to Embodiment 1 of the present invention.
FIG. 2 is a perspective diagram illustrating the excavator according to Embodiment 1 from a right rear side thereof.
FIG. 3 is a side diagram illustrating the excavator according to Embodiment 1 from a left side thereof.
FIG. 4 is a block diagram illustrating the excavator according to Embodiment 1.
FIG. 5 is a perspective diagram illustrating an inside of a cabin of the excavator according to Embodiment 1.
FIG. 6 is a side diagram illustrating the excavator according to Embodiment 1 from a right side thereof.
FIG. 7 is a plane diagram illustrating the excavator according to Embodiment 1 from the above.
FIG. 8 is a perspective diagram illustrating the excavator according to Embodiment 1 from a right front thereof.
FIG. 9 is an enlarged diagram of a control unit of the excavator according to Embodiment 1.
FIG. 10 is an enlarged diagram of the reception unit of the excavator according to Embodiment 1.
FIG. 11 is a schematic diagram explaining positioning of an excavator according to Embodiment 2 of the present invention.
FIG. 12 is a block diagram illustrating the excavator according to Embodiment 2.
FIG. 13 (a) is a diagram illustrating a guide unit of an excavator according to a modified example of Embodiment 1. FIG. 13 (b) is a diagram illustrating a rotational member of the excavator according to a modified example of Embodiment 1.

### DESCRIPTION OF EMBODIMENTS

An embodiment of the present invention will be described hereinafter with reference to accompanying drawings. However, the present invention is not limited to the embodiment below. It is noted overlapping description may be omitted as appropriate. It is also noted that in the drawings, a same reference character is applied to a same or corresponding portion and a description thereof is not repeated.

### (Embodiment 1)

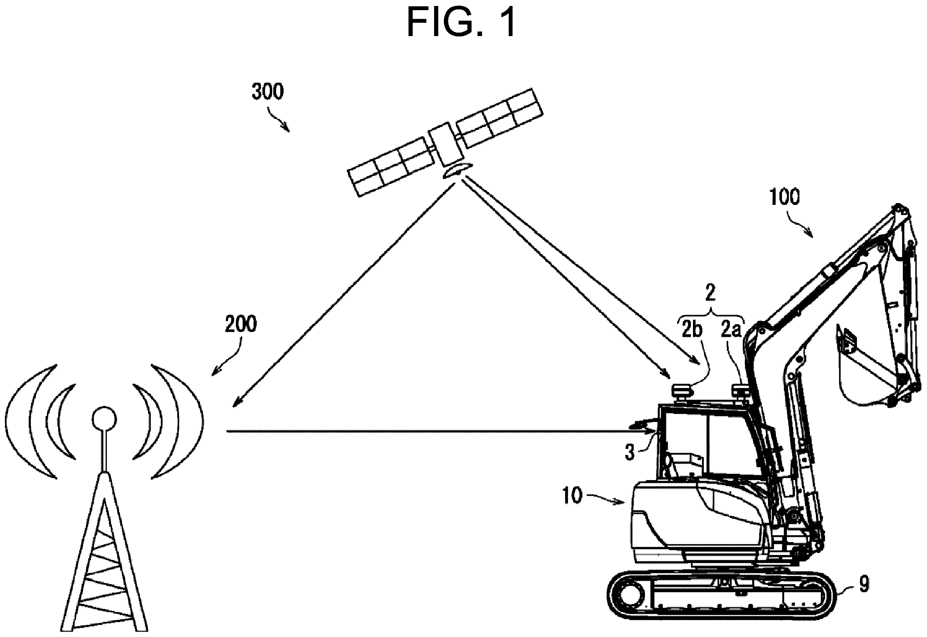

First, with reference to FIG. 1, positioning of an excavator 100 according to Embodiment 1 of the present invention will be explained. FIG. 1 is a schematic diagram illustrating the positioning of the excavator 100 according to Embodiment 1. In Embodiment 1, the positioning of the excavator 100 is performed by applying, for example, RTK positioning (real-time kinematic positioning) as a positioning method using a global navigation satellite system (GNSS).

In Embodiment 1 as shown in FIG. 1, the excavator 100 is provided with a first antenna 2, a reception unit 3, a traveling body 9, and a turning body 10. The excavator 100 is further provided with a control unit 1. It is noted that the control unit 1 is omitted in FIG. 1. The excavator 100 is an example of a construction machine. Specifically, in Embodiment 1, the excavator 100 is, for example, a hydraulic excavator.

The traveling body 9 causes the excavator 100 to travel. In Embodiment 1, the traveling body 9 is a crawler-type traveling body.

The turning body 10 is disposed above the traveling body 9. The turning body 10 is rotatably supported by the traveling body 9.

The first antenna 2 is disposed on the turning body 10. In Embodiment 1, the first antenna 2 is a Global Navigation Satellite System (GNSS) antenna. The first antenna 2 receives satellite signals from a 300 positioning satellite (GNSS satellite).

Specifically, the first antenna 2 includes a first antenna 2a and a first antenna 2b. The first antenna 2a, for example, receives satellite signals from the positioning satellite 300 to calculate position information indicating a position of the first antenna 2a on the earth. That is to say, the first antenna 2a receives satellite signals from the positioning satellite 300, for example, to calculate position information of the turning body 10 on the earth. The position information of the turning body 10 is represented, for example, by coordinates. On the other hand, the first antenna 2b receives satellite signals from the positioning satellite 300, for example, to calculate an orientation of the turning body 10. That is to say, the first antenna 2b receives satellite signals from the positioning satellite 300, for example, to calculate an azimuth angle of the turning body 10.

A reception unit 3 receives specific information from a reference station 200 to identify a position of the turning body 10. The reception unit 3 is also referred to as, for example, a receiver. The reference station 200 is one example of an "external device". Specific information received from the reference station 200 will be described below.

The reference station 200 is fixed and installed at a predetermined reference point. Specifically, the reference station 200 is installed, for example, around a work site where the excavator 100 performs work. The reference station 200 is provided with, for example, an antenna that receives satellite signals from the positioning satellite 300 and a communication device that is capable of performing wireless communication via a wireless communication network with the reception unit 3 of the excavator 100. The reference station 200 receives satellite signals from the positioning satellite 300 to obtain a pseudo distance from the positioning satellite 300 to the reference station 200 and a carrier phase (satellite positioning information) when the reference station 200 receives satellite signals. For example, every time satellite positioning information is measured from the positioning satellite 300 or every time a set period elapses, the reference station 200 generates specific information (calibration information) including the measured satellite positioning information and the position information of the reference point. Then, the reference station 200 transmits the specific information to the reception unit 3 of the excavator 100.

The control unit 1, for example, conducts a positioning calculation on the basis of the satellite signals received by the first antenna 2a and calculates position information (for example, coordinates) indicating the position of the turning body 10. Specifically, the control unit 1, for example, receives satellite signals from the positioning satellite 300 to obtain the pseudo distance from the positioning satellite 300 to the first antenna 2a and the carrier phase when the first antenna 2a receives the satellite signals. The control unit 1 then calculates the position information of the turning body 10 on the basis of the obtained pseudo distance and carrier phase.

The control unit 1 also performs a positioning calculation, for example, on the basis of the satellite signals received by the first antenna 2a and the satellite signals received by the first antenna 2b to calculate information indicating the orientation of the turning body 10. Specifically, the control unit 1, for example, calculates the position information of the first antenna 2a and the position information of the first antenna 2b, and then calculates a straight line connecting the position of the first antenna 2a with the position of the first antenna 2b. Then, the control unit 1 calculates information indicating the orientation of the turning body 10 on the basis of an angle formed between the calculated straight line and a reference azimuth. The reference azimuth is, for example, north.

The control unit 1 calibrates (corrects) the calculated position information and the calculated information indicating the orientation of the turning body 10 on the basis of specific information received by the reception unit 3. Therefore, position information and information indicating an orientation of the turning body 10 can be obtained with higher accuracy in comparison with a case where the position information and the information indicating the orientation of the turning body 10, respectively, are not calibrated on the basis of the specific information. As well, in Embodiment 1, the control unit 1 continuously calculates a baseline solution between the excavator 100 as a mobile station and the reference station 200. In Embodiment 1, the baseline solution is a vector (baseline vector) connecting the excavator 100 to the reference station 200. Therefore, a positioning solution, which is position information of the excavator 100, can be obtained in a real time. The positioning solution is a position of the excavator 100. In other words, in Embodiment 1, the position of the excavator 100 can be achieved in real time.

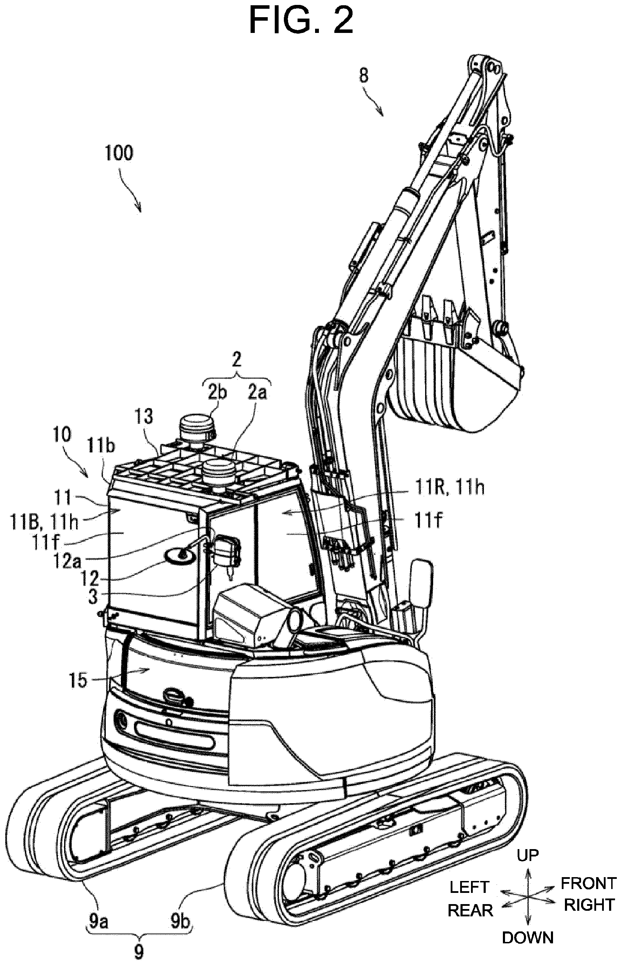

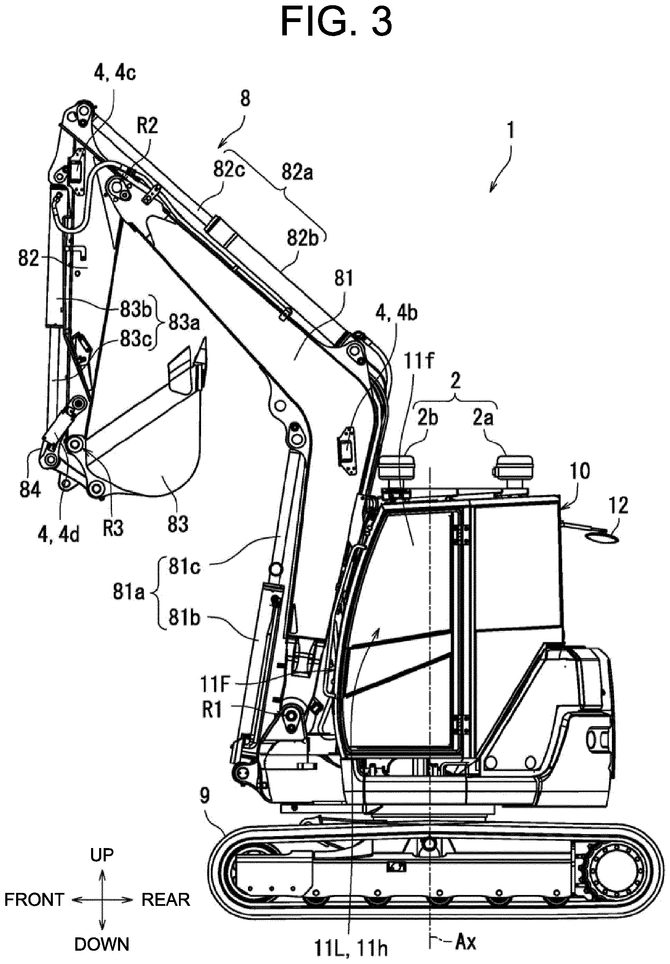

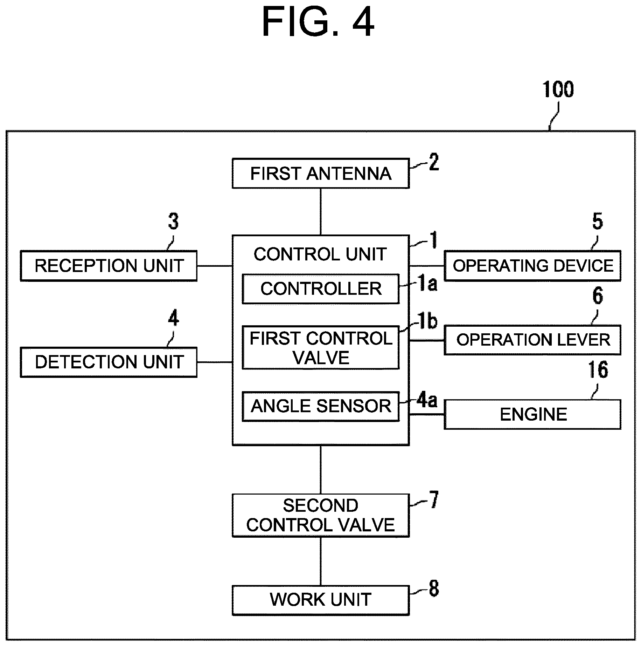

Subsequently, the excavator 100 according to Embodiment 1 will be described with reference to FIG. 2 to FIG. 4. FIG. 2 is a perspective diagram illustrating the excavator 100 according to Embodiment 1 from a right rear side thereof. FIG. 3 is a side diagram illustrating the excavator 100 according to Embodiment 1 from a left side thereof. FIG. 4 is a block diagram illustrating the excavator 100.

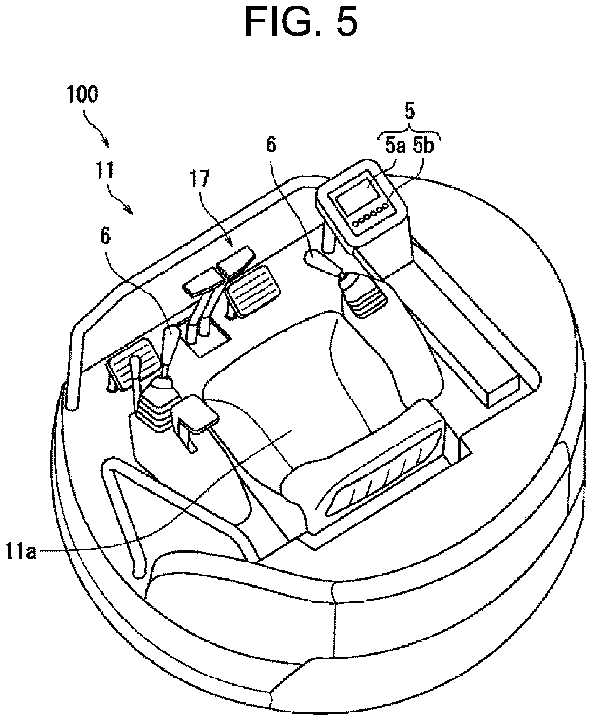

As illustrated in FIG. 2 to FIG. 4, the excavator 100 of Embodiment 1 is further provided with a detection unit 4, an operating device 5, an operation lever 6, a second control valve 7, a work unit 8, a mirror 12, and an engine 16. The operating device 5 and operation lever 6 will be described below with reference to FIG. 5.

The work unit 8 performs excavating work and the like. The work unit 8 is mounted on the turning body 10. The work unit 8 includes a boom 81, a boom actuator 81a, an arm 82, an arm actuator 82a, a bucket 83, and an attachment actuator 83a.

The boom 81 is supported by the turning body 10 so as to swing freely around a first rotation fulcrum R1.

The boom actuator 81a operates the boom 81. Specifically, the boom actuator 81a is driven by hydraulic oil and causes the boom 81 to swing around the first rotation fulcrum R1. The boom actuator 81a includes a boom cylinder 81b and a boom rod 81c. The boom cylinder 81b actuates boom 81 by advancing and retreating the boom rod 81c with hydraulic oil to operate the boom 81.

The arm 82 is supported by the boom 81 so as to freely swing around a second rotation fulcrum R2.

The arm actuator 82a operates the arm 82. Specifically, the arm actuator 82a is driven by hydraulic oil and causes the arm 82 to swing around the second rotation fulcrum R2. The arm actuator 82a includes an arm cylinder 82b and an arm rod 82c. The arm cylinder 82b operates the arm 82 by advancing and retracting the arm rod 82c by hydraulic oil.

The bucket 83 is a type of an attachment. The bucket 83 is supported by the arm 82 so as to freely swing around a third rotation fulcrum R3.

The attachment actuator 83a operates the bucket 83. Specifically, the attachment actuator 83a is driven by hydraulic oil and causes the bucket 83 to swing around the third rotation fulcrum R3. The attachment actuator 83a includes an attachment cylinder 83b and an attachment rod 83c. The attachment cylinder 83b operates the bucket 83 by advancing and retracting the attachment rod 83c by hydraulic oil.

The detection unit 4 detects an inclination of the excavator 100 and a posture of the work unit 8. Specifically, the detection unit 4 includes, for example, an angle sensor 4a, an angle sensor 4b, an angle sensor 4c, and an angle sensor 4d. The angle sensor 4a is included in the control unit 1. The angle sensor 4a detects an inclination angle of the excavator 100. The angle sensor 4b is disposed in the boom 81. The angle sensor 4b detects a rotation angle of the boom 81. The angle sensor 4c is disposed on the arm 82. The angle sensor 4c detects a rotation angle of the arm 82. The angle sensor 4d is disposed on a bucket link 84 that rotates the bucket 83. The angle sensor 4d detects a rotation angle of the bucket 83. Each of the angle sensor 4a through the angle sensor 4d is, for example, an inertial measurement unit (IMU).

In addition to the angle sensor 4a, the control unit 1 further includes a controller 1a and a first control valve 1b.

The controller 1a controls, for example, the operating device 5 and the engine 16. The controller 1a is, for example, an electronic control unit (ECU). In addition, the controller 1a includes, for example, a processor such as a central processing unit (CPU). The controller 1a outputs control signals, for example, on the basis of position information of the turning body 10 identified by specific information and information indicating an orientation of the turning body 10. Specifically, the controller 1a outputs the control signals, for example, on the basis of the position information of the turning body 10, the information indicating the orientation of the turning body 10, and the detection results of the detection unit 4.

The first control valve 1b converts control signals output by the controller 1a into hydraulic signals and inputs the hydraulic signals into the second control valve 7. The first control valve 1b is one example of a "switching valve".

Fuel is supplied from a fuel tank (not illustrated) to the engine 16. The engine 16 drives a hydraulic pump (not illustrated) to deliver pressure oil to the first control valve 1b or the second control valve 7. The pressure oil is hydraulic oil on which pressure is applied. The second control valve 7 controls a flow of pressure oil. Specifically, the second control valve 7 controls the flow and direction of the pressure oil and supplies the pressure oil to a turning motor (not illustrated) that causes the turning body 10 to turn, the boom cylinder 81b, the arm cylinder 82b, and the attachment cylinder 83b, and the traveling motor of the traveling body 9 (not illustrated). This results in driving the turning motor, the boom cylinder 81b, the arm cylinder 82b, the attachment cylinder 83b, and the traveling motor.

In other words, since the excavator 100 is provided with the detection unit 4, the reception unit 3, and the control unit 1 in Embodiment 1, the controller 1a can automatically control the work unit 8 on the basis of the position information of the turning body 10, the information indicating the orientation of the turning body 10, the detection results of the detection unit 4 and predetermined design data. This result in reducing operation labor of the excavator 100 on an operator. Specifically, for example, the controller 1a automatically controls the work unit 8 so as to cause the boom 81 and the bucket 83 to move in response to the arm 82's motion, thereby reducing the labor on an operator. For example, when the work unit 8 is operated by an operator, the work unit 8 is automatically controlled so as to perform excavating work on the basis of the predetermined design data (excavation depth, and the like) at a positioning position (position of the turning body 10). As a result, the excavation is performed in a depth in accordance with design data (design value).

The turning body 10 includes a cabin 11, a steering seat 11a, and a hood 15. It is noted that in FIG. 2 to FIG. 4, the steering seat 11a is omitted. The hood 15 covers the engine 16 of the excavator 100. The hood 15 is disposed, for example, at a rear portion of the turning body 10. Specifically, the hood 15 is disposed at an opposite side of the work unit 8 with respect to the cabin 11.

An operator of the excavator 100 sits in the steering seat 11a. The cabin 11 covers the steering seat 11a. The cabin 11 is supported, for example, by the frame (turning frame) provided in the turning body 10 via vibration proof rubber. In the present specification, "right" hereinafter refers to right when viewing forward from the cabin 11. "Left" refers to left when viewing forward from the cabin 11. In an example in FIG. 2, the cabin 11 is disposed at a left region in the turning body 10.

In Embodiment 1, the cabin 11 includes a plurality of frames 11c and a plurality of plate members 11f.

In Embodiment 1, the plurality of the frames 11c constitute a right side face section 11R, a left side face section 11L, a front face section 11F, and a back face section 11B of the cabin 11, respectively. In addition, each of the plurality of the frames 11c has an opening 11h. That is, to say, the plurality of the openings 11h, respectively, are located at the right side face section 11R, the left side face section 11L, the front face section 11F, and the back face section 11B of the cabin 11. The opening 11h, for example, serves as a window. It is noted that the opening 11h of the frame 11c, which constitutes the front face section 11F of the cabin 11, is not represented in FIG. 2 and FIG. 3.

In Embodiment 1, the plurality of the plate members 11f are attached to the plurality of the openings 11h, respectively. The plate members 11f are transparent materials such as a glass, for example.

In Embodiment 1, the first antenna 2, the reception unit 3, and the mirror 12 are disposed in the cabin 11.

Specifically, the first antenna 2 is disposed on a top surface 11b of the cabin 11. More specifically, each of the first antenna 2a and the first antenna 2b is disposed on the top surface 11b of the cabin 11 via a bracket 13 that is disposed on the top surface 11b of the cabin 11. The bracket 13 has, for example, a threaded groove provided thereon, and each of the first antenna 2a and the first antenna 2b is fixed to the bracket 13 by a screw. In Embodiment 1, the bracket 13 has a lattice shape, for example, and is made of metal.

In Embodiment 1, an area of the top surface 11b of the cabin 11 when viewed from above the turning body 10 and an area of the bracket 13 when viewed from above the turning body 10 are substantially identical with each other. On the other hand, it is preferable that the first antenna 2a and the first antenna 2b should be disposed at a predetermined interval therebetween. Therefore, even if where the area of the top surface 11b of the cabin 11 when viewed from above the turning body 10 is small, the first antenna 2a and the first antenna 2b can be disposed at a predetermined interval therebetween by placing on the top surface 11b a bracket 13 that has an area larger than the area of the top surface 11b.

The mirror 12 is disposed at a rear portion of the cabin 11. Specifically, the mirror 12 is mounted on a rear side of the frame 11c that constitutes the right side face section 11R of the cabin 11, for example, via a supporting body 12a. The supporting body 12a is, for example, a clamp. An operator of the excavator 100 checks a periphery of the traveling body 9, for example, via the mirror 12.

In Embodiment 1, the reception unit 3 has a substantial rectangular shape. The supporting body 12a of the mirror 12 has, for example, a threaded groove provided thereon, and the reception unit 3 is fixed to the supporting body 12a by a screw. That is to say, the reception unit 3 is mounted on the frame 11c that constitutes the cabin 11 via the supporting body 12a of the mirror 12. Therefore, the reception unit 3 can be disposed in the cabin 11 without having to provide in the cabin 11 a member different from the supporting body 12a. This means that the reception unit 3 can be easily attached to the cabin 11.

The traveling body 9 includes two crawlers. Hereinafter, of the two crawlers, the crawler located to the left may be described as a "crawler 9a" and the crawler located to the right may be described as a "crawler 9b". A direction in which the crawler 9a extends and a direction in which the crawler 9b extends are substantially in parallel with each other.

Next, an internal structure of the cabin 11 will be described with reference to FIG. 5. FIG. 5 is a perspective diagram illustrating the interior of the cabin 11. It is noted that in FIG. 5, a roof the cabin 11 (top surface 11b) is omitted to make the drawing easier to see.

The cabin 11 has disposed therein the operating device 5, a plurality of the operation levers 6 for operating the work unit 8, and a plurality of traveling levers 17 for operating the traveling body 9. In Embodiment 1, the plurality of the operating device 5 and the traveling levers 17 are disposed ahead of the steering seat 11a. In Embodiment 1, the plurality of operation levers 6 are disposed to the right and left of the steering seat 11a, respectively.

The operating device 5, for example, accepts various operations for the excavator 100 as well as displays various pieces of information with regard to the excavator 100. The operating device 5 includes a display unit 5a and an operating unit 5b.

The display unit 5a is composed of a display such as a liquid crystal display or an organic EL display. The display unit 5a displays, for example, various pieces of information with regard to the excavator 100.

The operating unit 5b accepts various kinds of operation instructions for the excavator 100. In the present embodiment, the operating unit 5b includes a plurality of operation switches. In Embodiment 1, the operation switch is, for example, a hard key (for example, push button). Therefore, an operator can operate the operating unit 5b while wearing a protective gear such as work gloves.

In a case where the display unit 5a is provided with a touch panel, the operating unit 5b may be displayed on the display unit 5a as a GUI (graphical user interface) widget. In this case, the display unit 5a shows, for example, the operating unit 5b as a widget. In addition, the operating unit 5b may function as a touch panel provided on the display unit 5a.

Each of the plurality of operation levers 6 receives operations from an operator of the excavator 100. The operation lever 6 is an operating member for operating the excavator 100. An operation signal is input into the second control valve 7 In response to an operation on the operation lever 6 by the operator of the excavator 100. The second control valve 7 supplies pressure oil to the work unit 8 in accordance with the operation amount for the operation lever 6 to operate the work unit 8.

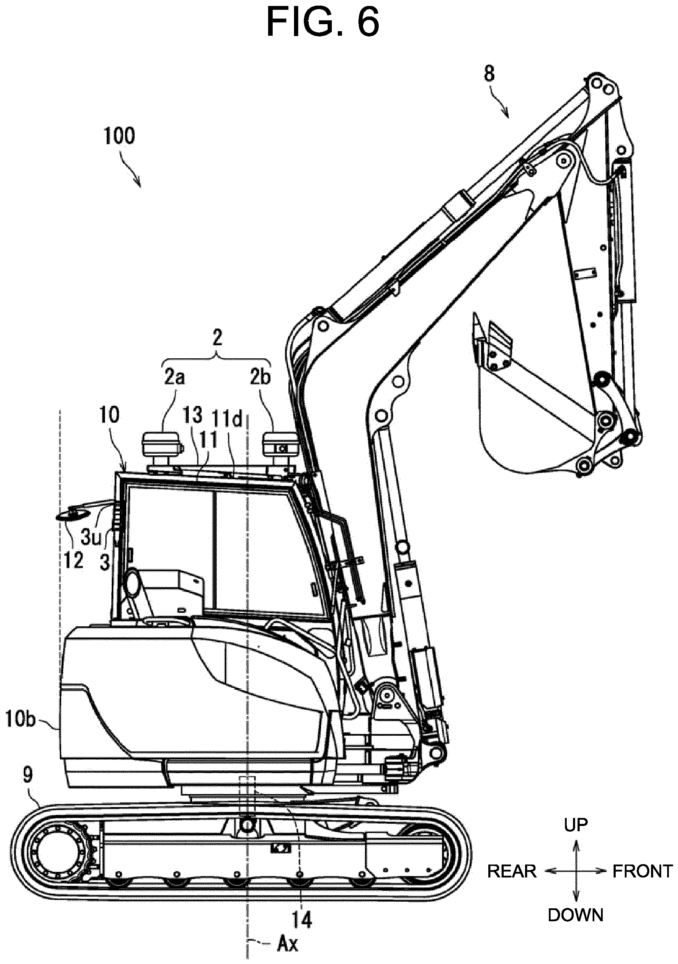

Next, a disposition of the reception unit 3 will be described with reference to FIG. 2 and FIG. 6. FIG. 6 is a side diagram illustrating the excavator 100 from a right side thereof.

The turning body 10 turns around the turning axis AX with respect to the traveling body 9. Specifically, the turning body 10 turns together with the rotary coupling member 14 with respect to the traveling body 9. That is to say, the turning axis AX is substantially identical to a central axis of the rotary coupling member 14. The rotary coupling member 14 is used, for example, as an oil channel between the turning body 10 and the traveling body 9. The rotary coupling member 14 includes, for example, a swivel joint.

In Embodiment 1, the reception unit 3 is disposed between the turning axis AX and a rear end 10b of the turning body 10. Specifically, the reception unit 3 is disposed between the turning axis AX and the rear end 10b in a front and rear direction of the turning body 10. Therefore, the reception unit 3 can be inhibited from contacting obstacles located behind the turning body 10. As a result, safety of the excavator 100 can be further enhanced.

Additionally, in Embodiment 1, the reception unit 3 is disposed at a rear portion of the cabin 11. Therefore, it is possible to inhibit the front or side view of an operator of the excavator 100 from being obstructed by the reception unit 3.

Furthermore, in Embodiment 1, the reception unit 3 protrudes from the cabin 11 in a right direction of the turning body 10. However, the reception unit 3 may protrude from the cabin 11 in a left of the turning body 10. That is to say, the reception unit 3 protrudes from the cabin 11 in the left or right direction of the turning body 10. Therefore, the plate member 11f located at the back face section 11B of the cabin 11 and the reception unit 3 are not overlapped with each other in the front and rear direction of the turning body 10. As a result, when an operator of the excavator 100 checks behind the turning body 10 via the plate member 11f located at the back face section 11B of the cabin 11, the operator's view is inhibited from being obstructed by the reception unit 3. In turn, the safety of the excavator 100 can be further enhanced.

Furthermore, in Embodiment 1, an upper end 3u of the reception unit 3 is located, for example, below an upper end 11d of the cabin 11. It is noted that a height of the upper end 3u of the reception unit 3 may be, for example, substantially identical to a height of the upper end 11d of the cabin 11. That is to say, the height of the upper end 3u of the reception unit 3 is substantially identical to the height of the upper end 11d of the cabin 11, or the upper end 3u of the reception unit 3 is located below the upper end 11d of the cabin 11. Therefore, the reception unit 3 can be inhibited from contacting obstacles located above the upper end 11d of the cabin 11. As a result, the safety of the excavator 100 can be further enhanced. In particular, it is preferable that the reception unit 3 should be disposed at a height where wireless communication between the reception unit 3 and the reference station 200 (refer to FIG. 1) is not blocked by obstacles and at a position higher than the hood 15. However, the reception unit 3 may be mounted on the top surface 11b of the cabin 11.

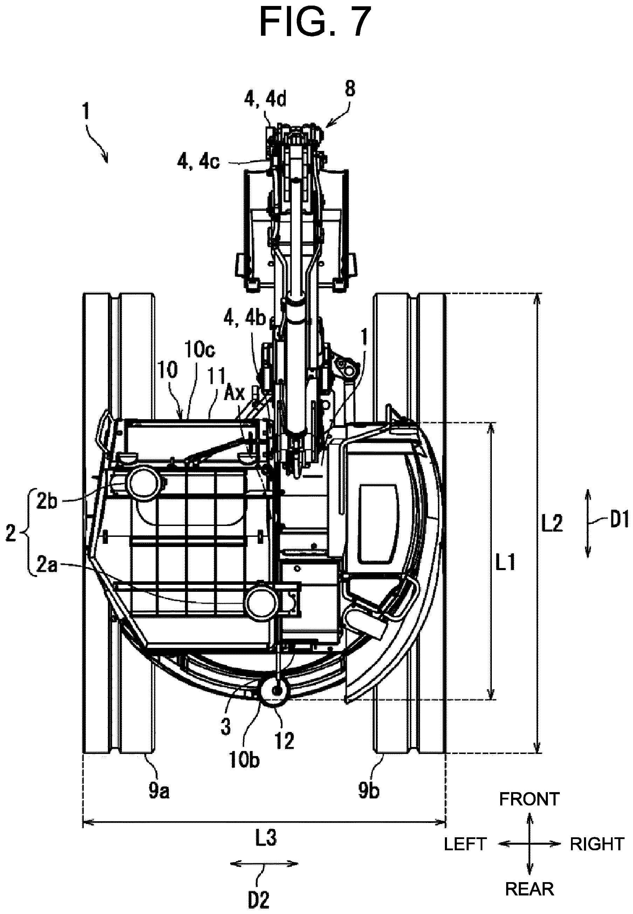

Next, the excavator 100 will be further described with reference to FIG. 7. FIG. 7 is a plane diagram illustrating the excavator 100 from the above.

As illustrated in FIG. 7, a length L1 from a front end 10c to a rear end 10b of the turning body 10 is less than or equal to a length L2 along a traveling direction of the traveling body 9, that is to say, a longitudinal direction D1. The length L2 of the traveling body 9 is also referred to as, for example, an overall length of the traveling body 9. Therefore, even in a case where the turning body 10 turns around the turning axis AX, the reception unit 3 that is disposed between the turning axis AX and the rear end 10b of the turning body 10 can be inhibited from contacting obstacles located outside of the traveling body 9. As a result, the safety of the excavator 100 can be further enhanced.

The length L1 of the turning body 10 is less than or equal to a total width L3 of the traveling body 9 along a traveling direction of the traveling body 9, that is to say, a direction substantially orthogonal to the longitudinal direction D1 (short-length direction D2). The total width L3 is, for example, a length from an outer edge along a longitudinal direction D 1 of the crawler 9a to an outer edge along a longitudinal direction D1 of the crawler 9b in the short-length direction D2. Therefore, even in a case where the turning body 10 turns around the turning axis AX, the reception unit 3 that is disposed between the turning axis AX and the rear end 10b of the turning body 10 can be inhibited from contacting obstacles located outside of the traveling body 9. As a result, the safety of the excavator 100 can be further enhanced.

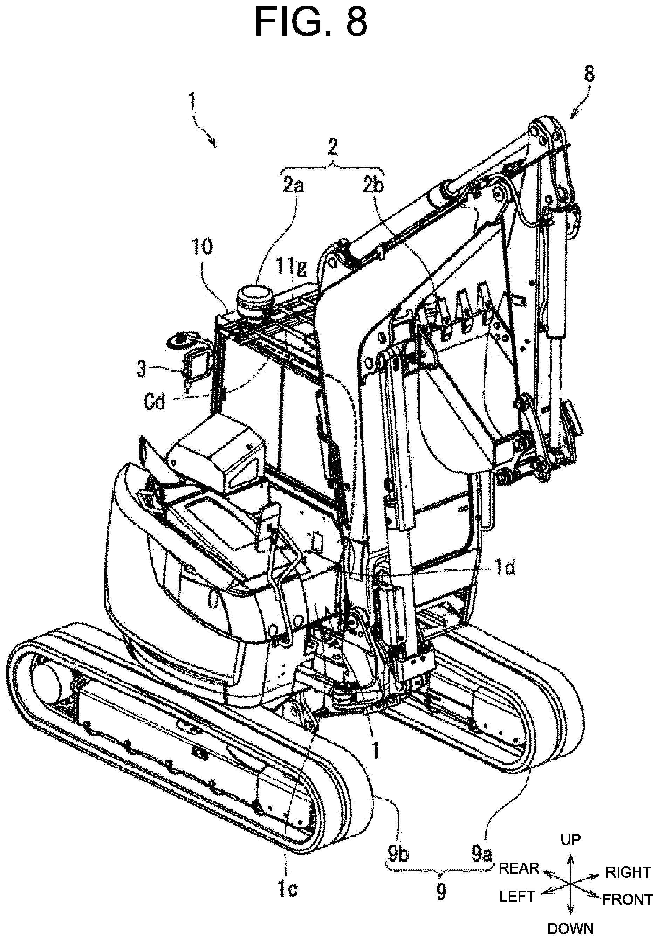

The control unit 1 provided in the excavator 100 will be described with reference to FIG. 7 and FIG. 8. FIG. 8 is a perspective diagram illustrating the excavator 100 from a right front thereof.

As illustrated in FIG. 7 and FIG. 8, the control unit 1 is disposed behind the work unit 8 and at a front side of the turning body 10 in the front and rear direction of the turning body 10. Thus, the control unit 1 can be easily disposed in the excavator 100 because a space is likely to be provided at the rear portion of the work unit 8. In addition, the excavator 100 can be reduced in size in comparison with a case where the control unit 1 is not disposed behind the work unit 8 and at the front side of the turning body 10.

Furthermore, the control unit 1 is disposed behind the work unit 8 and at the front side of the turning body 10, so that, for example, the hydraulic piping can be shortened. The hydraulic piping is, for example, piping connecting a hydraulic pump to the first control valve 1b, piping connecting the first control valve 1b to a fuel tank, and piping connecting the fuel tank to the hydraulic pump. As a result, it is possible to dispose (route) hydraulic piping easily.

The control unit 1 is further provided with a housing 1c. The housing 1c is made of, for example, metal. The housing 1c houses the controller 1a, the first control valve 1b, and the angle sensor 4a. Therefore, the controller 1a, the first control valve 1b, and the angle sensor 4a can be unitized. As a result, it is possible to reduce time and effort required to dispose the controller 1a, the first control valve 1b, and the angle sensor 4a on the turning body 10.

Since the controller 1a, the first control valve 1b, and the angle sensor 4a are housed in the housing 1c, it is possible to prevent the controller 1a, the first control valve 1b, and the angle sensor 4a from being exposed. As a result, at least one of the controller 1a, the first control valve 1b, and the angle sensor 4a can be inhibited from contacting an obstacle or the work unit 8.

The control unit 1 is also disposed at a lower portion of the turning body 10. Specifically, the control unit 1 is disposed below the reception unit 3 in a vertical direction of the turning body 10. The control unit 1 is more likely to be heavy. Thus, the control unit 1 can be disposed stably. It is also possible to reduce load on mounting members (for example, bracket) for attaching the control unit 1 to the turning body 10.

In Embodiment 1, the excavator 100 has a wiring Cd connecting the reception unit 3 to the controller 1a of the control unit 1. In Embodiment 1, the wiring Cd is disposed along the cabin 11. In other words, the wiring Cd is routed along the cabin 11. Specifically, the wiring Cd is disposed, for example, along the upper end portion of the frame 11c, which constitutes the right side face section 11R of the cabin 11. Thus, for example, the wiring Cd can be guided by attaching a first support member 11g, such as a hook, to a threaded groove preinstalled in the frame 11c. That is to say, for example, the wiring Cd can be easily disposed without applying any new processing to the cabin 11 (such as adding more threaded grooves in the frame 11c) so as to attach the first support member 11g to the frame 11c.

In Embodiment 1, the first support member 11g is, for example, a hook as described above. The first support member 11g supports the wiring Cd. Therefore, the wiring Cd can be easily supported by the first support member 11g.

In addition, in Embodiment 1, the wiring Cd is disposed, for example, along an inner surface of the cabin 11. Specifically, a portion of the wiring Cd is disposed along the inner surface of the cabin 11. Therefore, it is possible to inhibit the wiring Cd from contacting the work unit 8, and the like. As a result, the safety of the excavator 100 can be further enhanced. It is noted that the entire wiring Cd may be disposed along an outer surface of the cabin 11. In this case, the first support member 11g is disposed outside the cabin 11.

Furthermore, in Embodiment 1, the control unit 1 includes a second support member 1d that supports the wiring Cd. The second support member 1d is, for example, a hook. The second support member 1d is disposed at the housing 1c. Specifically, the second support member 1d is disposed, for example, at the front side of and at the upper side of the housing 1c in the front and rear direction of the turning body 10. Thus, the wiring Cd can be flexed around the housing 1c. As a result, the load on the wiring Cd caused by bending of the wiring Cd can be inhibited in comparison with a case where the control unit 1 does not include the second support member 1d.

In Embodiment 1, the control unit 1 and the cabin 11 are disposed along a left and right direction of the turning body 10. Specifically, in Embodiment 1, the control unit 1 is disposed adjacent to the right of cabin 11. Thus, it is easy to electrically connect the reception unit 3, the operating device 5 disposed in the cabin 11, the operation lever 6 disposed in the cabin 11, and the work unit 8 with each other using wiring.

Additionally, in Embodiment 1, the control unit 1 is disposed below the opening 11h of the frame 11c, which constitutes the cabin 11, in the up and down direction of the turning body 10. Thus, the view of an operator of the excavator 100 is inhibited from being obstructed by the control unit 1. As a result, the safety of the excavator 100 can be further enhanced.

In Embodiment 1, the reception unit 3, the control unit 1, and the detection unit 4 are disposed along the front and rear direction of the turning body 10. Specifically, the reception unit 3, the control unit 1, the angle sensor 4a, the angle sensor 4b, the angle sensor 4c, and the angle sensor 4d are disposed along the front and rear direction of the turning body 10. It is noted that as is mentioned above, the angle sensor 4a is included in the control unit 1. Therefore, when an operator of the excavator 100 checks around the turning body 10, it is possible to inhibit operator's view from being obstructed by the reception unit 3, the control unit 1, and the detection unit 4 in comparison with a case where the reception unit 3, the control unit 1, and the detection unit 4 are not disposed along the front and rear direction of the turning body 10. As a result, the safety of the excavator 100 can be further enhanced. In addition, the reception unit 3, the control unit 1, and the detection unit 4 are linearly arranged to facilitate construction of wiring connecting the reception unit 3, the control unit 1, and the detection unit 4 with each other. This means that it is easy to wire the reception unit 3, the control unit 1, and the detection unit 4.

In Embodiment 1, when the turning body 10 is viewed from above, the first antenna 2 (first antenna 2a and first antenna 2b) is disposed between the turning axis AX and an outer edge of the turning body 10. In other words, as described above, the first antenna 2 is disposed at the top surface 11b of the cabin 11. Therefore, the first antenna 2 can be inhibited from contacting obstacles located behind the turning body 10. As a result, the safety of the excavator 100 can be further enhanced.

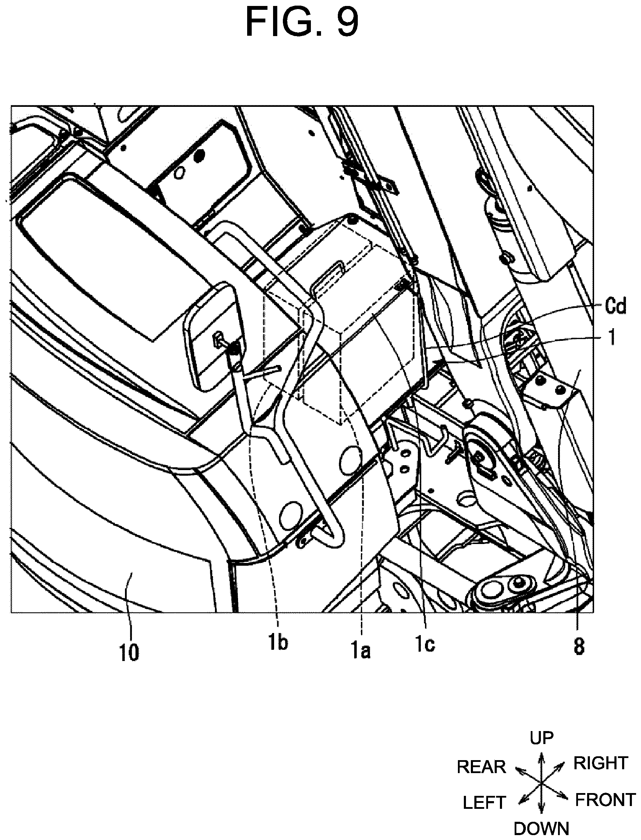

Subsequently, the control unit 1 will be explained with reference to FIG. 9. FIG. 9 is an enlarged diagram of the control unit 1 of the excavator 100. As illustrated in FIG. 9, the controller 1a and the first control valve 1b are disposed along the front and rear direction of the turning body 10 in the housing 1c. Specifically, the controller 1a is disposed, for example, ahead of the first control valve 1b in the front and rear direction of the turning body 10. Thus, the control unit 1 can be prevented from becoming larger in the left and right direction of the turning body 10. In turn, the control unit 1 can be reduced in size. It is noted that the height of the controller 1a is, for example, smaller than the height of the first control valve 1b.

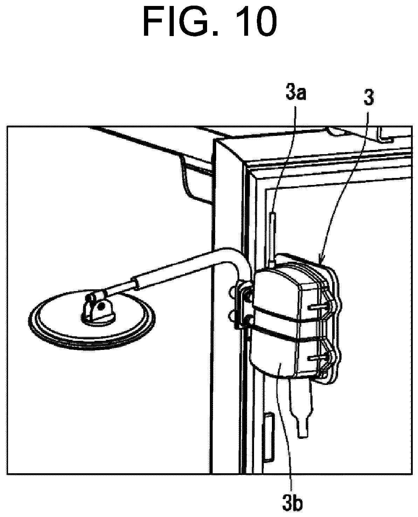

Subsequently, the reception unit 3 will be described with reference to FIG. 10. FIG. 10 is an enlarged diagram of the reception unit 3 of the excavator 100. As illustrated in FIG. 10, the reception unit 3 includes a second antenna 3a and a main body 3b. The second antenna 3a receives specific information, for example, from the reference station 200 (refer to FIG. 1). The main body 3b obtains specific information received by the second antenna 3a. Then, the main body 3b transmits the obtained specific information to the controller 1a of the control unit 1 via the wiring Cd (refer to FIG. 8). In Embodiment 1, the second antenna 3a and the main body 3b are integrally formed.

### (Embodiment 2)

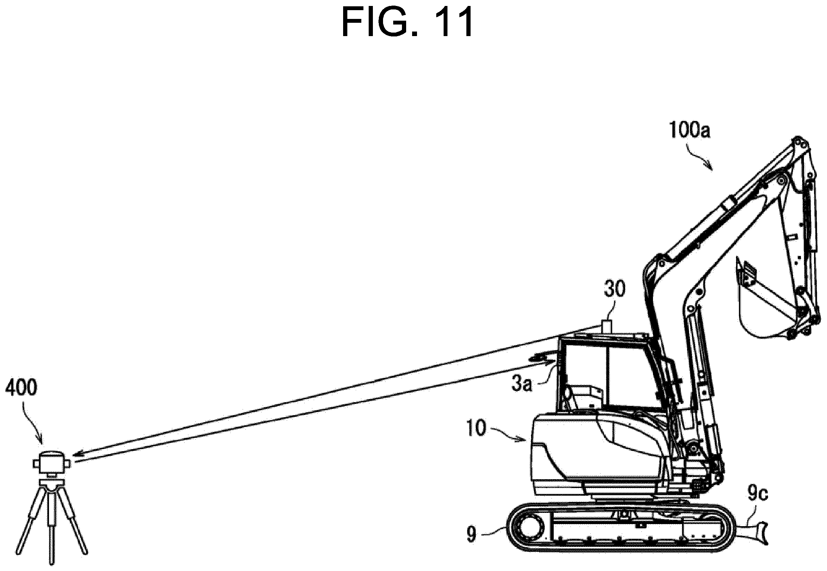

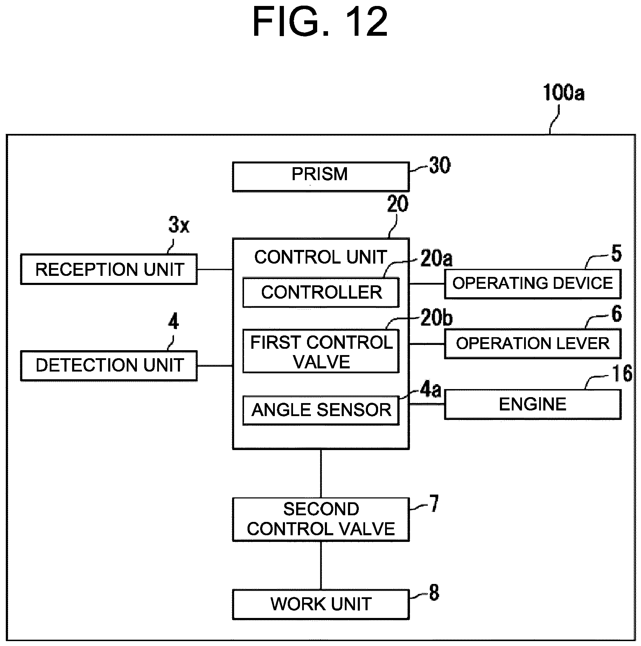

An excavator 100a according to Embodiment 2 will be described with reference to FIG. 11 and FIG. 11. FIG. 11 is a schematic diagram explaining positioning of the excavator 100a. FIG. 12 is a block diagram illustrating the excavator 100a. The excavator 100a in Embodiment 2 differs primarily from the excavator 100 in Embodiment 1 in that the excavator 100a is positioned using a total station 400. Hereinafter, the main points in which Embodiment 2 differs from Embodiment 1 will be explained, and overlapping portions will be omitted.

As illustrated in FIG. 11, positioning of the excavator 100a is performed using a total station 400 in Embodiment 2. The excavator 100a is provided with a prism 30. The prism 30 functions as a target for the total station 400. The prism 30 is disposed, for example, at a top surface 1 1b of a cabin 11. The total station 400 is one example of an "external device".

The total station 400 measures a position of the prism 30 and transmits specific information as the measured result to a reception unit 3x. The reception unit 3x then inputs the specific information received from the total station 400 into the control unit 1. The control unit 1 identifies the position of the excavator 100 on the basis of the specific information obtained via the reception unit 3x. Then, the control unit 1 controls a first control valve 1b, for example, on the basis of the position of the turning body 10 identified on the basis of the specific information.

The embodiments of the present invention have been described above with reference to the drawings. However, the present invention is not limited to the above-mentioned embodiments, but can be implemented in various modes in a range not departing from the gist thereof. Further, a plurality of components disclosed in the above-mentioned embodiments can be modified as appropriate. For example, one component included in all components described in one embodiment may be added to components of another embodiment, or some components included in all components described in one embodiment may be omitted from another embodiment.

The drawings schematically show each component as a main subject so as to facilitate understanding of the invention, and the thickness, the length, the quantity, the period, and the like of each shown component may be different from the actual ones for the sake of preparing the drawings. Further, the configuration of each component in the above-described embodiments is merely one example, and the present invention is not limited thereto. It is needless to say that the configuration can be variously altered within a scope not substantially departing from effects of the present invention.

For example, as described in FIG. 1, RTK positioning is applied in Embodiment 1 as a positioning method using the global positioning satellite system. However, another positioning method may be applied. For example, a differential global Positioning system (DGPS) may be applied.

In addition, for example, wireless communication between the reference station 200 and the excavator 100 is directly performed in Embodiment 1, so that the reception unit 3 obtains specific information. However, the reception unit 3 may obtain specific information from the reference station 200 via a network such as the Internet.

Furthermore, for example, in Embodiment 1 and Embodiment 2, the frame 11c of the cabin 11 includes a plurality of plate members 11f. However, the cabin 11 does not have to include the plate member 11f In other words, the opening 11h of the frame 11c may be open.

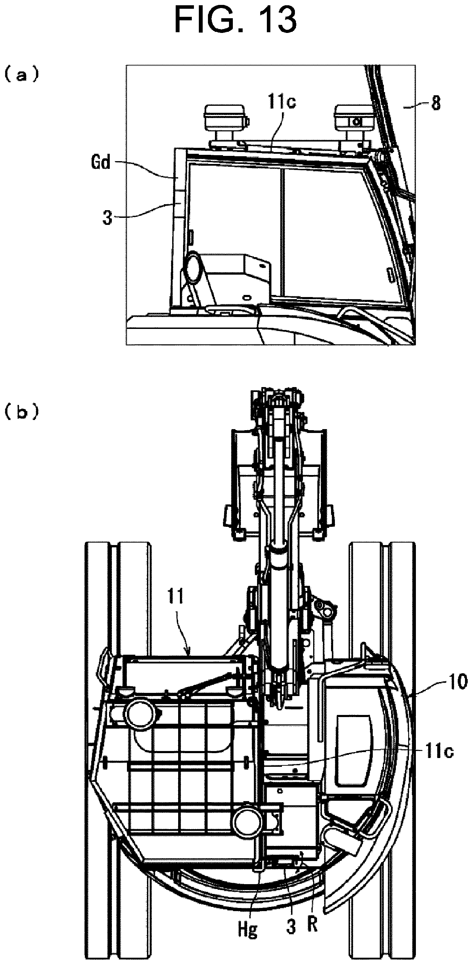

Furthermore, for example, in Embodiment 1 and 2, the reception unit 3 is fixed to the supporting body 12a of the mirror 12. However, as illustrated in FIG. 13(a), the reception unit 3 may be supported along a guide unit Gd, which is disposed adjacent to the cabin 11. FIG. 13(a) is a diagram illustrating a guide unit Gd of the excavator 100 for a variant example according to Embodiment 1. Specifically, in the variant example, the turning body 10 includes a guide unit Gd that extends in the up and down direction of the turning body 10. The guide unit Gd is disposed at a right side of and behind the cabin 11 and adjacent to the cabin 11. The guide unit Gd is, for example, a slide rail. For example, the reception unit 3 can be moved along the guide unit Gd, that is to say, along the up and down direction of the turning body 10. After the reception unit 3 is moved to a desired position, the reception unit 3 is fixed, for example, with a screw. Thus, the reception unit 3 can be freely disposed in the up and down direction of the turning body 10. For example, in a case where the reception unit 3 communicates with the reference station 200, the reception unit 3 can be disposed at an upside of the turning body 10. In addition, in a case where it is desired to avoid contact between the reception unit 3 and obstacles located above, the reception unit 3 can be disposed below. It is noted that a space may be provided between the guide unit Gd and the cabin 11, or the guide unit Gd may adhere to the cabin 11.

As illustrated in FIG. 13(b), the reception unit 3 may be connected to the cabin 11 by a rotational member Hg. FIG. 13(b) illustrates the rotational member Hg of the excavator 100 according to another variant example of Embodiment 1. Specifically, the turning body 10 includes the rotational member Hg. The rotational member Hg is, for example, a hinge. The rotational member Hg is, for example, connected rotatably to the cabin 11. Specifically, the rotational member Hg is disposed, for example, at a right side and at a rear side of the cabin 11. That is to say, the rotational member Hg is mounted, for example, on the rear side of the frame 11c, which constitutes the right side face section 11R of the cabin 11. The rotational member Hg connects the reception unit 3 to the cabin 11 rotatably in a direction R with respect to the cabin 11. In other words, the reception unit 3 can be rotated in a horizontal direction. Thus, the reception unit 3 can be freely disposed in a horizontal direction.

Furthermore, for example, as illustrated in FIG. 10, in Embodiment 1 and Embodiment 2, the second antenna 3a and the main body 3b in the reception unit 3 are integrally formed. It is noted that the second antenna 3a and the main body 3b may be separate. Thus, the second antenna 3a and the main body 3b may be disposed at positions different from each other. In this case, for example, the second antenna 3a may be disposed outside the cabin 11 and the main body 3b may be disposed inside the hood 15 or inside the cabin 11. Therefore, it is possible to control the main body 3b being contacted with an obstacle or the work unit 8. As a result, the safety of the excavator 100 can be further enhanced.

Furthermore, for example, as illustrated in FIG. 11, in Embodiment 2, the prism 30 is disposed at the top surface 11b of the cabin 11. However, a position of the prism 30 is not particularly limited as long as the prism 30 serves as a target for the total station 400. For example, the prism 30 may be disposed at an upper portion of a pillar installed in a soil removal mechanism 9c included in the traveling body 9. The soil removal mechanism 9c is used to perform, for example, a soil removal operation for soil, sand, and the like, and a leveling operation for a developed land, a road, and the like.

In Embodiment 1 and Embodiment 2 described with reference to FIG. 1 through FIG. 13, the excavator 100 has been described as an example construction machine, but the construction machine is not limited to the excavator 100. The construction machine is, for example, a loader such as a wheel loader, or a carrier.

Although the above-mentioned examples describe a cabin-type construction machine, this preset invention can also be applied to a canopy-type construction machine. In a case where the above-mentioned examples are applied to a canopy-type construction machine, a reception unit 3 can be disposed at a predetermined position in a canopy pillar or a visor, thereby being capable of avoiding contact with surrounding obstacles and securing good communication with a reference station 200 or a total station 400, as is a case with the cabin-type construction machine.

### INDUSTRIAL APPLICABILITY

The present invention relates to a construction machine and has industrial applicability.

### DESCRIPTION OF REFERENCE NUMERALS

100 hydraulic excavator (construction machine)
1 control unit
1a controller
1b first control valve (switching valve)
2 first antenna
3 reception unit
3a second antenna
3b main body
8 work unit
9 traveling body
10 turning body
11 cabin
200 reference station (external device)
400 total station (external device)
AX turning axis
Gd guide unit
Hg rotational member

## Claims

1. A construction machine comprising:
a traveling body;
a turning body that is disposed above the traveling body and turns around a turning axis with respect to the traveling body; and
a reception unit that receives from an external device specific information to identify a position of the turning body, wherein
the reception unit is disposed between the turning axis and a rear end of the turning body.

2. The construction machine according to claim 1, wherein
the turning body includes a cabin, and the reception unit is disposed at a rear portion of the cabin.

3. The construction machine according to claim 1 or 2, wherein
a length from a front end to a rear end of the turning body is less than or equal to a length along a traveling direction of the traveling body.

4. The construction machine according to any one of claims 1 to 3, wherein
the length from a front end to a rear end of the turning body is less than or equal to a total width of the traveling body along a direction substantially orthogonal to a traveling direction of the traveling body.

5. The construction machine according to any one of claims 1 to 4, wherein
the turning body includes a cabin, and
the reception unit protrudes from the cabin in a left direction or a right direction of the turning body.

6. The construction machine according to any one of claims 1 to 5, wherein
the turning body includes a cabin,
the reception unit is disposed in the cabin, and
a height of an upper end of the reception unit is substantially identical to a height of an upper end of the cabin or the upper end of the reception unit is located below the upper end of the cabin.

7. The construction machine according to any one of claims 1 to 6 further comprising:
a work unit that is mounted on the turning body and performs work; and
a control unit that controls the work unit on the basis of the position of the turning body identified on the basis of the specific information, wherein
the control unit is disposed behind the work unit and at a front side of the turning body.

8. The construction machine according to claim 7, wherein
the control unit includes:
a controller that outputs control signals on the basis of the position of the turning body identified by the specific information; and
a switching valve that converts the control signals into hydraulic signals and controls the work unit on the basis of the hydraulic signals, and
the controller and the switching valve are disposed along a front and rear direction of the turning body.

9. The construction machine according to any one of claim 7 or 8, wherein
the turning body includes a cabin, and
the control unit and the cabin are disposed along a left and right direction of the turning body.

10. The construction machine according to any one of claims 7 to 9, wherein
the turning body includes a cabin,
the cabin has an opening located at a right side face section or a left side face section of the cabin, and
the control unit is disposed below the opening.

11. The construction machine according to any one of claims 8 to 10, wherein
the turning body includes a cabin and has a wiring connecting the reception unit to the control unit, the wiring being disposed along the cabin.

12. The construction machine according to claim 11, wherein
the wiring is disposed along an inner surface of the cabin.

13. The construction machine according to claim 11 or 12, wherein
the cabin includes a first support member that supports the wiring.

14. The construction machine according to any one of claims 11 to 13, wherein
the control unit includes:
a housing that houses the controller and the switching valve; and
a second support member that is disposed in the housing and supports the wiring.

15. The construction machine according to any one of claims 7 to 14, further comprising a detection unit that detects a posture of the work unit.

16. The construction machine according to claim 15, wherein
the reception unit, the control unit, and the detection unit are disposed along a front and rear direction of the turning body.

17. The construction machine according to any one of claims 1 to 16, further comprising a first antenna for receiving position information indicating the position of the turning body from a satellite, wherein
the position information is calibrated on the basis of the specific information.

18. The construction machine according to claim 17, wherein
the turning body includes a cabin, and
the first antenna is disposed at a top surface of the cabin.

19. The construction machine according to any one of claims 1 to 18, wherein
the turning body includes a cabin,
the cabin includes a guide unit extending in an up and down direction of the turning body, and
the reception unit is supported to be able to be raised and lowered along the guide unit.

20. The construction machine according to any one of claims 1 to 19, wherein
the turning body includes a cabin and a rotational member that connects the reception unit to the cabin, and
the rotational member is connected rotatably to the cabin.

21. The construction machine according to any one of claims 1 to 20, wherein
the reception unit includes:
a second antenna that receives the specific information; and
a main body that obtains the specific information received by the second antenna, and
the main body and the second antenna are disposed at positions different from each other.
